# EUROPEAN PATENT APPLICATION

(11) **EP 2 436 578 A1**
(43) Date of publication of application: **04.04.2012**
(21) Application number: 10182183.3
(22) Date of filing: 29.09.2010
(51) Int. Cl.: B62D 25/06, B62D 27/02, B62D 29/00

(54) **Connection arrangement for connecting a roof part to a car body**

(71) Applicant: SAAB AUTOMOBILE AB, 461 80 Trollhättan (SE)
(72) Inventor: Lundström, Jesper, 462 60, VÄNERSBORG (SE)
(74) Representative: Milanov, Nina Vendela Maria

(57) **Abstract**

The present invention relates to a connection arrangement for connecting a roof part (100) with a car body (200) and to a method for assembling the connection arrangement. The roof part (100) has a roof sub portion (110) for connection with the car body (200) and a roof main portion (120), wherein the roof main portion (120) has an exterior side (122) and an interior side (124), wherein the roof sub portion (110) has a first side (112) for connection with the car body (200) and a second side (114), and wherein the roof sub portion (110) is bent around an angle (α) towards the interior side (124), so that the second side (114) faces the interior side (124).

## Description

### Technical field

The present invention relates to a connection arrangement for connecting a roof part with a car body and to a method for assembling the connection arrangement.

### Background art

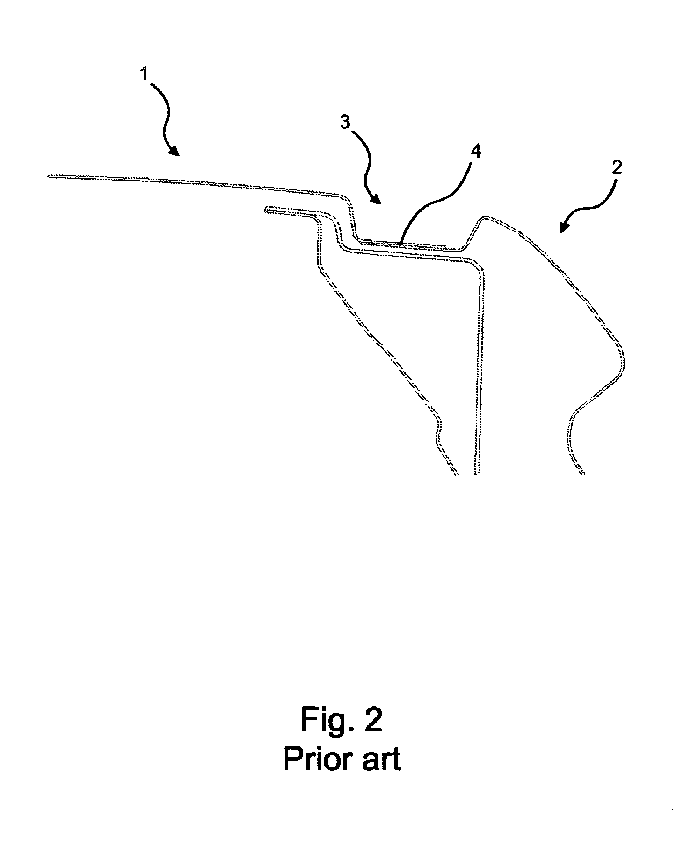

Fig. 2 illustrates an arrangement according to prior art. When mounting a roof panel 1 to a car body 2, the side brims of the roof panel are connected to the side panels of the car body. The brims are attached to the car body using, e.g., welding. The roof panel is folded so that the brim 4 constitutes the bottom of a space 3. This space 3 is necessary to be able to weld the roof panel to the car body, see Fig. 2.

A problem with this space is that fluids such as rainwater and water mixed with detergents accumulate in the space. The fluids subject the cutting edge of the roof panel to corrosion, which decreases the useful life of the roof panel. Furthermore, the space is not considered to be beautiful. In order to solve these problems, a décor strip is mounted so that it covers the space. The décor strip can be made of, e.g., rubber, aluminium, plastics or a mixture of different materials. This décor strip is an expensive part to manufacture and involves an extra assembly step, which also increases the cost of the car.

### Summary of the invention

In view of the above, an objective of the invention is to solve or at least reduce one or several of the drawbacks discussed above. Generally, the above objective is achieved by the attached independent patent claims.

According to a first aspect, the present invention is realized by a connection arrangement for connecting a roof part with a car body. The roof part has a roof sub portion for connection with the car body and a roof main portion, wherein the roof main portion has an exterior side and an interior side, wherein the roof sub portion has a first side for connection with the car body and a second side, and wherein the roof sub portion is bent around an angle towards the interior side, so that the second side faces the interior side.

This connection arrangement is advantageous in that the roof main portion protects the cutting edge of the roof panel, the edge of the roof sub portion, from exposure to, e.g., rainwater, or water mixed with detergents, and no extra sealing of the edge is necessary. The roof main portion covering the cutting edge also has the advantage that the cutting edge is not visible and does not disturb the aesthetic appearance of the car body. Furthermore, no expensive décor strip is necessary, which makes this connection arrangement very capacity and cost efficient. Additionally, if the car body and the roof part are spray-coated, it is not necessary to mask the cutting edge since it is already covered by the roof main portion.

The roof part can be made of aluminium which is advantageous in that the roof part is lighter than if it were made by, e.g., steel.

The first side can be adapted to be connected to the car body using adhesive. In contrast to if, e.g., the first side and the car body were to be welded together, no extra space has to be provided for welding equipment.

The car body may comprise a car body sub portion for connection with the roof sub portion, and the car body may comprise a depression adjacent to the car body sub portion, said depression being arranged so that it is accessible from the exterior of the car body. This is advantageous in that if fluids find their way between the roof part and the car body, the fluids may be collected in the depression and are not in contact with the roof sub portion and the car body sub portion, thereby decreasing the risk of corrosion of the roof sub portion and the car body sub portion. When the car moves, the fluids move and are guided through the channel formed by the depression along the sides of the car. Furthermore, if the roof sub portion and the car body sub portion are connected using adhesive, excessive adhesive can be collected in the depression but still not be visible from the exterior of the car body and hence not disturb the aesthetic appearance of the car.

The roof sub portion may be bent so that the second side of the roof sub portion is in contact with the interior side of the roof main portion. This can be achieved through folding which implies less complicated tooling and increased interior space below the roof sub portion.

The second side of the roof sub portion and the interior side of the roof main portion can be arranged so that a gap is formed between the second side of the roof sub portion and the interior side of the roof main portion. This is advantageous in that the load bearing capacity is increased.

The angle formed between the second side of the roof sub portion and the interior side of the roof main portion may be obtuse. This is advantageous in that no unnecessary cavities are formed which can collect dirt and/or fluids.

According to a second aspect, the present invention is realized by a method for assembling a connection arrangement for connecting a roof part with a car body. The roof part used in said method has a roof sub portion for connection with the car body and a roof main portion, wherein the roof main portion has an exterior side and an interior side, and wherein the roof sub portion has a first side for connection with the car body and a second side. Said method comprises the steps of: bending the roof sub portion around an angle towards the interior side, so that the second side faces the interior side, and connecting the first side with the car body.

This is advantageous in that the roof main portion protects the cutting edge of the roof panel, the edge of the roof sub portion, from exposure to, e.g., rainwater, or water mixed with detergents and no extra sealing of the edge is necessary. The roof main portion covering the cutting edge also has the advantage that the cutting edge is not visible and does not disturb the aesthetic appearance of the car body. Furthermore, no expensive décor strip is necessary which makes this connection arrangement very capacity and cost efficient. Additionally, if the car body and the roof part are spray-coated, it is not necessary to mask the cutting edge since it is already covered by the roof main portion.

The step of connecting may comprise connecting the first side to the car body using adhesive. In contrast to if, e.g., the first side and the car body were to be welded together, no extra space has to be provided for welding equipment.

The roof part may be made of aluminium which is advantageous in that the roof part is lighter than if it were made of, e.g., steel.

The step of bending can comprise bending the roof sub portion so that the second side of the roof sub portion is in contact with the interior side of the roof main portion. This can be achieved through folding which implies less complicated tooling and increased interior space below the roof sub portion.

The step of bending may comprise bending the roof sub portion so that a gap is formed between the second side of the roof sub portion and the interior side of the roof main portion. This is advantageous in that the load bearing capacity is increased.

The car body may comprise a car body sub portion for connection with the roof sub portion, and the method may further comprise the step of arranging a depression adjacent to the car body sub portion, said depression being arranged so that it is accessible from the exterior of the car body. This is advantageous in that if fluids find their way between the roof part and the car body, the fluids may be collected in the depression and are not in contact with the roof sub portion and the car body sub portion decreasing the risk of corrosion of the roof sub portion and the car body sub portion. When the car moves, the fluids move and are guided through the channel formed by the depression along the sides of the car.

Furthermore, if the roof sub portion and the car body sub portion are connected using adhesive, excessive adhesive can be collected in the depression but still not be visible from the exterior of the car body and hence not disturb the aesthetic appearance of the car.

Other objectives, features and advantages of the present invention will appear from the following detailed disclosure, from the attached claims as well as from the drawings.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise. The steps of any method disclosed herein do not have to be performed in the exact order disclosed, unless explicitly stated.

### Brief Description of the Drawings

Other features and advantages of the present invention will become apparent from the following detailed description of a presently preferred embodiment, with reference to the accompanying drawings, in which
Fig. 1 is a perspective view of a roof part,
Fig. 2 is a cross-sectional view of a prior art roof part,
Fig. 3a is a cross-sectional view of an embodiment of a roof part of a connection arrangement according to the invention,
Fig. 3b is a cross-sectional view of an embodiment of a roof part of a connection arrangement according to the invention,
Fig. 4a is a cross-sectional view of an embodiment of a connection arrangement according to the invention,
Fig. 4b is a cross-sectional view of an embodiment of a connection arrangement according to the invention,
Fig. 4c is a cross-sectional view of an embodiment of a connection arrangement according to the invention, and
Fig. 4d is a cross-sectional view of an embodiment of a connection arrangement according to the invention.

### Detailed description of preferred embodiments of the invention

The present invention will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout.

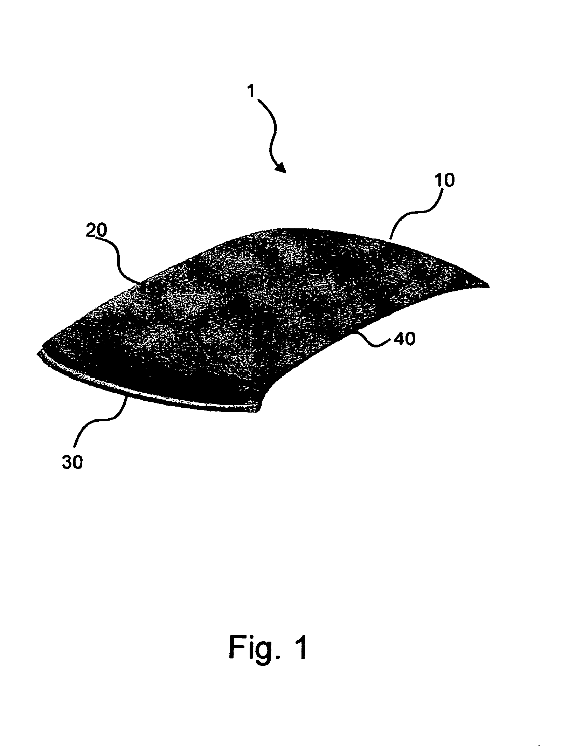

Fig. 1 discloses a roof part 1 which is to be mounted on a car body. The inventive connection arrangement can, e.g., be realized along all sides 10, 20, 30, and 40 of the roof part 1. Alternatively, the inventive connection arrangement can, e.g., be realized along sides 10, 20 and 30. In this embodiment, the side 40 can be connected to the car body as in prior art and can be protected by the front/rear windscreen. Alternatively, the inventive connection arrangement can, e.g., be realized along sides 10 and 30 which are connected to the side parts of the car body. In this embodiment, the sides 20 and 40 can be connected to the car body as in prior art and can be protected by the front and rear windscreens.

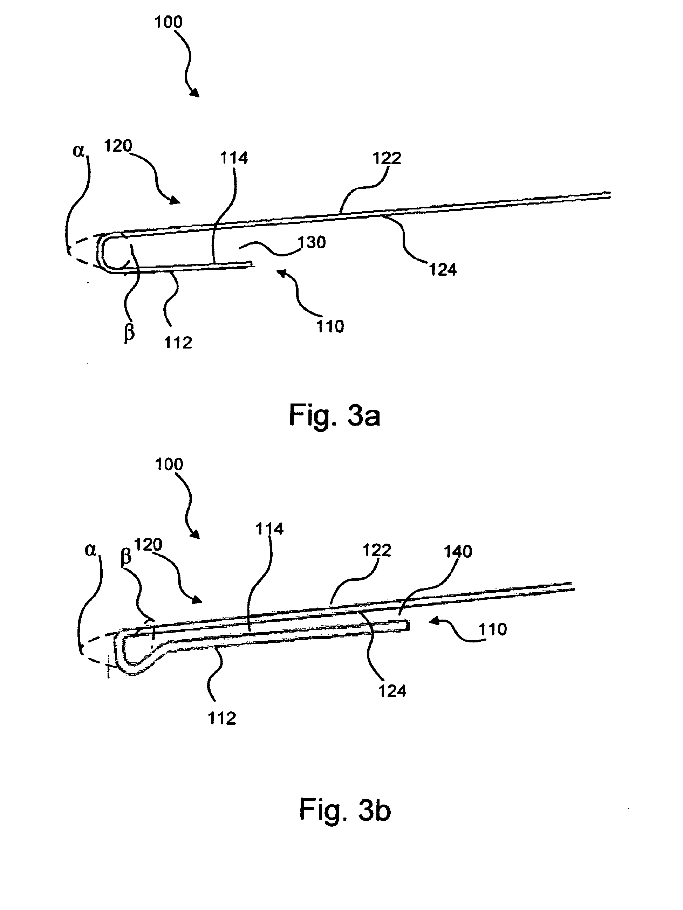

Figs 3a and b disclose a cross-sectional view of a roof part 100. The roof part 100 has a roof sub portion 110 for connection with a car body and a roof main portion 120. The roof main portion 120 has an exterior side 122 and an interior side 124. The roof sub portion 110 has a first side 112 for connection with the car body and a second side 114. The roof sub portion 110 is bent around an angle α towards the interior side 124, so that the second side 114 faces the interior side 124.

The angle β formed between the second side 114 of the roof sub portion 110 and the interior side 124 of the roof main portion 120 is obtuse. This is advantageous in that no unnecessary cavities are formed which can collect dirt and/or fluids.

In the embodiment of Fig. 3a, the second side 114 of the roof sub portion 110 and the interior side 124 of the roof main portion 120 are arranged so that a gap 130 is formed between the second side 114 of the roof sub portion 110 and the interior side 124 of the roof main portion 120. The gap 130 increases the load bearing capacity of the roof part 100.

In the embodiment of Fig. 3b, the roof sub portion 110 is bent so that the second side 114 of the roof sub portion 110 is almost in contact with the interior side 124 of the roof main portion 120. This can be achieved through folding which implies less complicated tooling and increased interior space below the roof sub portion 110. In one embodiment (not shown), the roof sub portion is bent so that the second side of the roof sub portion is in contact with the interior side of the roof main portion.

The roof part 100 can e.g. be made of aluminium which is advantageous since aluminium is lightweight.

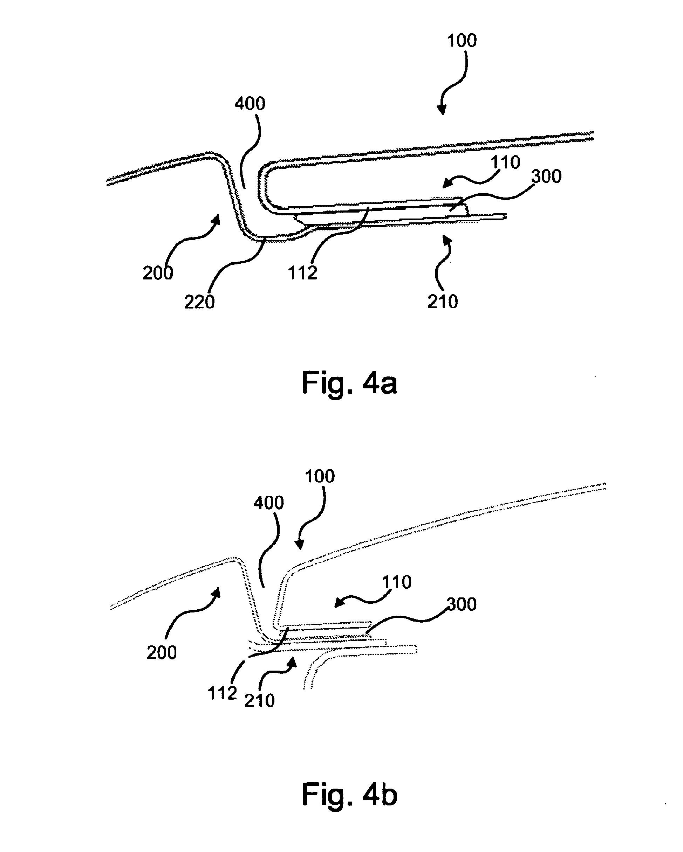

Figs 4a-d disclose cross-sectional views of embodiments of the inventive connection arrangement. In Fig. 4a, the roof part 100 is connected with the car body 200. The first side 112 of the roof sub portion 110 is connected to a car body sub portion 210. The first side 112 is connected to the car body sub portion 210 using adhesive 300.

The car body 200 comprises a depression 220 adjacent to the car body sub portion 210. The depression 220 is accessible from the exterior of the car body 200 through the gap 400 formed between the roof part 100 and the car body 200.

This arrangement is advantageous in that if fluids find their way through the gap 400 between the roof part 100 and the car body 200, the fluids may be collected in the depression 220 and are not in contact with the adhesive 300, the roof sub portion 110 and the car body sub portion 210, thereby decreasing the risk of corrosion of the roof sub portion 110 and the car body sub portion 220. When the car moves, the fluids move and are guided through the channel formed by the depression 300 along the side of the car.

Furthermore, if the roof sub portion 110 and the car body sub portion 220 are connected using adhesive 300, as is disclosed in fig 3a, excessive adhesive 300 can be collected in the depression 220 but still not be visible from the exterior of the car body and hence not disturb the aesthetic appearance of the car.

Fig. 4b discloses an alternative embodiment of the inventive connection arrangement. This embodiment is similar to the connection arrangement of Fig. 4a but does not comprise the depression 220.

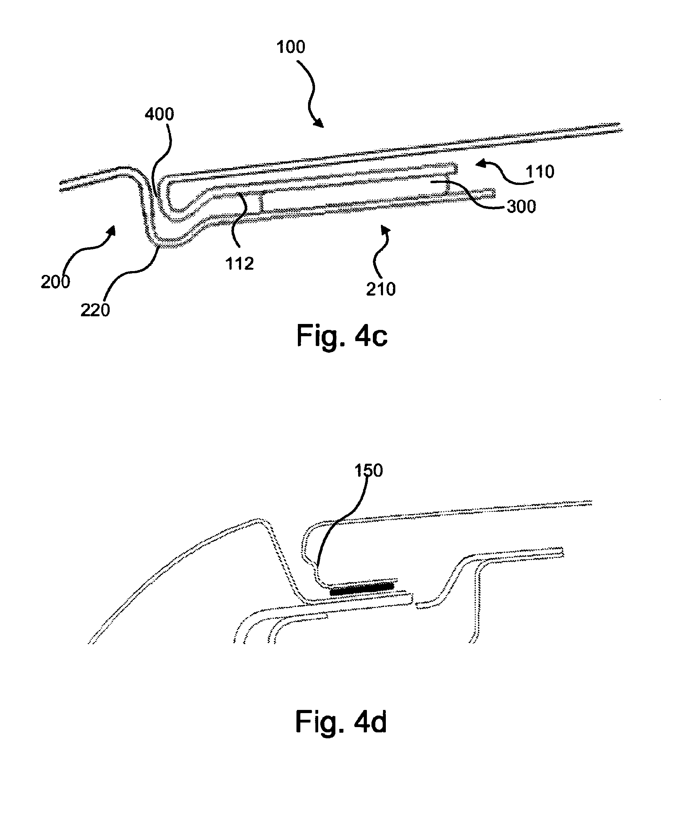

Fig. 4c discloses another embodiment of the inventive connection arrangement. This connection arrangement comprises the roof part 100 of fig 3b.

It is to be noted that the gap 400 formed between the roof part 100 and the car body 200 can be of different width, see, e.g., Figs 4a, b, and c. When deciding of what width the gap is to be, the tolerances of the parts, and the aesthetics of the car are to be taken into consideration.

In one embodiment, the first side 112 can have a boss (not shown). The boss can be arranged in the first side 112 and protrude in a direction towards the car body sub portion 210. Alternatively, the car body sub portion 210 can have a boss (not shown). The boss can be arranged in the car body sub portion 210 and protrude in a direction towards the first side 112. As a further alternative, both the first side 112 and the car body sub portion 210 can have a boss (not shown). A first boss can be arranged in the first side 112 and protrude in a direction towards the car body sub portion 210. A second boss can be arranged in the car body sub portion 210 and protrude in a direction towards the first side 112. Preferably, the first and second boss are not arranged directly opposite to each other. Such a boss simplifies cleaning and painting of the car body 200 and the roof part 100. When the car body 200 and the roof part 100 are to be washed and painted, they have not yet been connected using, e.g., adhesive. Instead, they are detachably attached. Thereafter, the car body 200 and the roof part 100 are immersed in a dye-bath and/or a cleaner bath. Due to the boss, a space is formed between the car body sub portion 210 and the roof sub portion 110 and the liquid can flow through this space between the car body 200 and the roof part 100. After the cleaning and/or painting, the car body 200 and the roof part 100 are detached and can be connected using, e.g., adhesive. As an alternative to the boss, a depression can be arranged in the first side 112 and/or the car body sub portion 210.

To increase the load bearing capacity, the roof part 100 can be folded creating at least one fold 150, as is shown in Fig. 4d.

In the following, the inventive method for assembling the connection arrangement for connecting a roof part 100 with a car body 200 will be explained with reference to Figs 2-3.

The roof part 100 comprises a roof sub portion 110 for connection with the car body 200 and a roof main portion 120, wherein the roof main portion 120 has an exterior side 122 and an interior side 124, and wherein the roof sub portion 110 has a first side 112 for connection with the car body 200 and a second side 114. The roof sub portion 110 is bent around an angle α towards the interior side, so that the second side 114 faces the interior side 124. The first side 112 is connected with the car body 200 using, e.g., adhesive.

The roof sub portion 110 is bent so that the second side 114 of the roof sub portion 110 is in contact with the interior side 124 of the roof main portion 120.

Alternatively, the roof sub portion 110 is bent so that a gap 130 is formed between the second side 114 of the roof sub portion 110 and the interior side 124 of the roof main portion 120.

Optionally, a depression 220 is arranged adjacent to a car body sub portion 210, said depression 220 being arranged so that it is accessible from the exterior of the car body 200.

## Claims

1. Connection arrangement for connecting a roof part (100) with a car body (200), the roof part (100) having a roof sub portion (110) for connection with the car body (200) and a roof main portion (120),
wherein the roof main portion (120) has an exterior side (122) and an interior side (124),
wherein the roof sub portion (110) has a first side (112) for connection with the car body (200) and a second side (114), and
wherein the roof sub portion (110) is bent around an angle (α) towards the interior side (124), so that the second side (114) faces the interior side (124).

2. Connection arrangement according to claim 1, wherein the roof part (100) is made of aluminium.

3. Connection arrangement according to any of the preceding claims, wherein the first side (112) is adapted to be connected to the car body (200) using adhesive (300).

4. Connection arrangement according to any of the preceding claims, wherein the car body (200) comprises a car body sub portion (210) for connection with the roof sub portion (110), and
wherein the car body (200) comprises a depression (220) adjacent to the car body sub portion (210), said depression (220) being arranged to be accessible from the exterior of the car body (200).

5. Connection arrangement according to any of the preceding claims, wherein the roof sub portion (110) is bent so that the second side (114) of the roof sub portion (110) is in contact with the interior side (124) of the roof main portion (120).

6. Connection arrangement according to any of claims 1-5, wherein the second side (114) of the roof sub portion (110) and the interior side (124) of the roof main portion (120) are arranged so that a gap (400) is formed between the second side (114) of the roof sub portion (110) and the interior side (124) of the roof main portion (120).

7. Connection arrangement according to claim 6, wherein the angle (β) formed between the second side (114) of the roof sub portion (110) and the interior side (124) of the roof main portion (120) is obtuse.

8. Method for assembling a connection arrangement for connecting a roof part (100) with a car body (200), the roof part (100) having a roof sub portion (110) for connection with the car body (200) and a roof main portion (120),
wherein the roof main portion (120) has an exterior side (122) and an interior side (124), and
wherein the roof sub portion (110) has a first side (112) for connection with the car body (200) and a second side (114), said method comprising the steps of:
bending the roof sub portion (110) around an angle (α) towards the interior side, so that the second side (114) faces the interior side (124), and
connecting the first side (112) with the car body (200).

9. Method according to claim 8, wherein the step of connecting comprises connecting the first side (112) to the car body using adhesive (300).

10. Method according to any of claims 8-9, wherein the roof part (100) is made of aluminium.

11. Method according to any of claims 8-10, wherein the step of bending comprises bending the roof sub portion (110) so that the second side (114) of the roof sub portion (110) is in contact with the interior side (124) of the roof main portion (120).

12. Method according to any of claims 8-10, wherein the step of bending comprises bending the roof sub portion (110) so that a gap (130) is formed between the second side (114) of the roof sub portion (110) and the interior side (124) of the roof main portion (124).

13. Method according to any of claims 8-12, wherein the car body (200) comprises a car body sub portion (210) for connection with the roof sub portion (110), the method further comprising
arranging a depression (220) adjacent to the car body sub portion (210), said depression (220) being arranged so that it is accessible from the exterior of the car body (200).
